# FASCICULE DE BREVET EUROPEEN

(11) **EP 3 983 245 B1**
(45) Date de publication et mention de la délivrance du brevet: **02.08.2023**
(21) Numéro de dépôt: 20732208.2
(22) Date de dépôt: 10.06.2020
(51) Int. Cl.: B60H 1/00

(54) **DISPOSITIF DE COMMANDE, INSTALLATION DE CHAUFFAGE ET/OU VENTILATION ET/OU CLIMATISATION, VEHICULE AUTOMOBILE ET PROCÉDÉ DE GESTION DE TEMPÉRATURE ASSOCIÉS**
STEUERVORRICHTUNG UND ZUGEHÖRIGE HEIZUNGS- UND/ODER BELÜFTUNGS- UND/ODER KLIMAANLAGE, KRAFTFAHRZEUG UND TEMPERATURVERWALTUNGSVERFAHREN
CONTROL DEVICE, AND ASSOCIATED HEATING AND/OR VENTILATION AND/OR AIR CONDITIONING INSTALLATION, MOTOR VEHICLE AND TEMPERATURE MANAGEMENT METHOD

(30) Priorité: 13.06.2019 FR 1906340
(43) Date de publication de la demande: 20.04.2022
(73) Titulaire: VALEO SYSTEMES THERMIQUES, 78320 Le Mesnil Saint-Denis (FR)
(72) Inventeur: BARBIER, Thierry, 78320 LE MESNIL SAINT-DENIS (FR)
(74) Mandataire: Valeo Systèmes Thermiques
(86) Numéro de dépôt international: PCT/EP2020/066151
(87) Numéro de publication internationale: WO 2020/249650

(56) Documents cités:
- EP-A1- 0 795 807
- DE-A1- 10 058 360
- DE-A1-102015 110 559
- JP-B2- 3 458 432
- US-A- 4 390 124

## Description

La présente invention est du domaine des véhicules automobiles, en particulier des installations de chauffage et/ou ventilation et/ou climatisation pour véhicule automobile. L'invention concerne en particulier un dispositif de commande d'une telle installation. L'invention concerne également un véhicule automobile comportant une telle installation. L'invention concerne encore un procédé de gestion de température mis en oeuvre par un tel dispositif de commande.

Le confort thermique pour des occupants d'un habitacle d'un véhicule automobile, est généralement obtenu en agissant sur un flux d'air destiné à être soufflé à l'intérieur de l'habitacle à travers différents aérateurs, notamment vers le pare-brise pour le dégivrage ou le désembuage par exemple, vers une partie haute des corps des occupants, ou encore au niveau des pieds des occupants.

Un véhicule automobile est couramment équipé d'une installation de chauffage et/ou ventilation et/ou climatisation pour réguler les paramètres aérothermiques du flux d'air destiné à être distribué vers l'intérieur de l'habitacle du véhicule. Une telle installation est couramment appelé HVAC (pour Heating, Ventilation and Air-Conditioning en anglais).

Cette installation comprend généralement un boîtier de traitement d'air délimité par des cloisons dans lesquelles sont ménagées des ouvertures, dont au moins une entrée d'air et au moins une sortie d'air destinée à déboucher dans une région donnée de l'habitacle, notamment à travers les différents aérateurs.

Le boîtier de traitement d'air loge généralement des moyens de traitement thermique, tels que des échangeurs thermiques, pour réchauffer et/ou refroidir le flux d'air préalablement à sa distribution à l'intérieur de l'habitacle. À titre d'exemple, les moyens de traitement thermique peuvent comprendre un évaporateur destiné à refroidir et déshumidifier le flux d'air le traversant, ainsi qu'un moyen de chauffage, notamment un radiateur, éventuellement associé à un dispositif de chauffage électrique, aussi appelé radiateur additionnel, qui est destiné à réchauffer le flux d'air qui le traverse.

Des organes de mixage sont agencés dans le boîtier de traitement d'air pour ajuster la température du flux d'air destiné à être distribué. Pour ce faire, ces organes de mixage sont pilotés de manière à définir la proportion de flux d'air froid et de flux d'air chaud à distribuer à l'intérieur de l'habitacle. Il s'agit par exemple de volets de mixage mobiles entre au moins deux positions extrêmes.

Il est connu de prévoir, dans le boîtier de traitement d'air, au moins une chambre de mixage pourvue d'un tel organe de mixage pour définir la proportion d'un ou plusieurs flux d'air froid et/ou chaud pénétrant dans la chambre de mixage. Cette chambre de mixage sert à mélanger les flux d'air, de sorte que le flux d'air issu du mélange, ayant la température de consigne souhaitée, soit distribué vers l'habitacle du véhicule automobile.

Selon les solutions connues comme, par exemple, celle du document JP 3 458432 B2, la gestion du confort thermique dans l'habitacle s'appuie sur un contrôle privilégié de l'apport thermique vers le haut du corps des occupants du véhicule. Ainsi, lorsque l'installation fonctionne selon un mode pour délivrer un flux d'air vers les aérateurs au niveau du haut du corps des occupants et des pieds, la commande de température se fait de façon commune pour délivrer un flux d'air à destination du haut du corps des occupants égale ou proche de la consigne de température tandis que la température du flux d'air à destination des pieds peut être plus importante. Ainsi, pour une commande de température dans l'habitacle par exemple autour de 20°C ou 25°C, le flux d'air délivré aux aérateurs vers le haut du corps est à une température ajustée de l'ordre de 20-25°C, tandis que le flux d'air à destination des pieds peut par exemple, selon les modes de fonctionnement de l'installation, être délivré à une température supérieure de 5°C à 15°C par rapport à la température du flux d'air délivré vers le haut des corps des occupants du véhicule.

Les occupants du véhicule peuvent être gênés par une telle différence de température, et se trouvent dans une position d'inconfort thermique, par exemple en ayant trop chaud aux pieds par rapport au reste du corps.

Cependant, du fait du pilotage global des organes de mixage, tout changement de la commande de température entraîne une modification à la fois de la température du flux d'air délivré vers les pieds et du flux d'air délivré vers les aérateurs en partie haute des corps des occupants du véhicule. En conséquence, les occupants peuvent ne pas réussir à trouver un confort thermique.

Il existe donc un besoin d'améliorer la gestion thermique dans l'habitacle du véhicule.

L'invention a pour objectif de pallier au moins partiellement ces inconvénients de l'art antérieur en proposant une solution simple permettant un ajustement de la température mieux adapté aux besoins des passagers d'un véhicule automobile.

A cet effet, telle que définie dans la revendication 1, a pour objet un dispositif de commande pour une installation de chauffage et/ou ventilation et/ou climatisation de véhicule automobile comprenant un habitacle, ladite installation comprenant un boîtier de traitement d'air comportant au moins deux sorties d'air destinées à débouchées dans une zone de l'habitacle dont au moins première sortie d'air de dégivrage et/ou d'aération et au moins une deuxième sortie d'air au niveau des pieds, et au moins un premier et au moins un deuxième organes de mixage du flux d'air pour produire un flux d'air à température ajustée à destination de ladite première et/ou deuxième sortie d'air. Selon l'invention, ledit dispositif comporte une interface utilisateur configurée pour être agencée dans l'habitacle, comprenant au moins un premier organe de commande pour le réglage de la température d'un premier flux d'air à destination de ladite première sortie d'air et au moins un deuxième organe de commande pour le réglage de la température d'un deuxième flux d'air à destination de ladite deuxième sortie d'air. De plus, ledit dispositif comporte un circuit de commande configuré pour recevoir, de chaque organe de commande, un signal d'entrée avec une consigne de température propre, et pour délivrer des signaux de commande distincts pour le pilotage desdits premier et deuxième organes de mixage, de façon à ajuster indépendamment la température des premier et deuxième flux d'air à destination respectivement de ladite première et de ladite deuxième sorties d'air.

Un tel dispositif permet un contrôle en température indépendant pour le premier flux d'air au niveau de la première sortie d'air de dégivrage et/ou d'aération, dans une région haute de l'habitacle, et pour le deuxième flux d'air au niveau de la deuxième sortie d'air au niveau des pieds, dans une région basse de l'habitacle. Il s'agit d'une région haute et d'une région basse d'une même zone de l'habitacle. L'utilisateur a ainsi la possibilité de régler lui-même et de choisir la température qu'il souhaite en haut et en bas. Les termes haut et bas sont définis par rapport à un axe vertical du véhicule automobile.

Ledit dispositif peut en outre comporter une ou plusieurs caractéristiques suivantes, prises séparément ou en combinaison.

Selon un mode de réalisation, l'interface utilisateur est configurée pour être agencée dans un habitacle présentant au moins deux zones. Cette interface utilisateur comprend au moins deux premiers organes de commande pour le réglage de la température d'un premier flux d'air à destination d'au moins une première sortie d'air pour chaque zone de l'habitacle, et au moins deux deuxièmes organes de commande pour le réglage de la température d'un deuxième flux d'air à destination d'au moins une deuxième sortie d'air pour chaque zone de l'habitacle. Ceci s'applique en particulier pour une installation permettant une séparation gauche droite et/ou avant arrière, permettant un contrôle en température indépendant pour chaque zone de l'habitacle ainsi que pour les régions haute et basse de chaque zone.

Selon un aspect de l'invention, le circuit de commande est configuré pour délivrer des signaux de commande distincts pour le pilotage de façon indépendante d'au moins un premier actionneur dudit au moins un premier organe de mixage dans une première chambre de mixage dudit boîtier, et d'au moins un deuxième actionneur dudit au moins un deuxième organe de mixage dans une deuxième chambre de mixage dudit boîtier.

Selon un autre aspect, le circuit de commande est configuré pour recevoir au moins un signal d'entrée d'activation d'un mode de fonctionnement de ladite installation pour une gestion séparée du flux d'air à destination de ladite au moins une première sortie d'air et de ladite au moins une deuxième sortie d'air, et pour délivrer au moins un signal de commande pour piloter le déplacement d'au moins un organe de séparation agencé dans ledit boîtier dans une position de séparation des première et deuxième chambres de mixage.

Selon encore un autre aspect, le circuit de commande est configuré pour délivrer au moins un signal de commande pour contrôler le positionnement d'au moins un organe de mise en communication au niveau de chaque sortie d'air de sorte que la première chambre de mixage communique avec ladite au moins une première sortie d'air, et que la deuxième chambre de mixage communique avec ladite au moins une deuxième sortie d'air.

Les organes de commande peuvent être choisis parmi au moins un bouton de commande ou de réglage tel qu'un bouton rotatif, ou une surface tactile telle qu'un écran tactile ou un pavé tactile.

L'invention a également pour objet une installation de chauffage et/ou ventilation et/ou climatisation comportant :
- un boîtier de traitement d'air comportant au moins deux sorties d'air destinées à débouchées dans une zone de l'habitacle dont au moins première sortie d'air de dégivrage et/ou d'aération et au moins une deuxième sortie d'air au niveau des pieds, et
- au moins un premier et un deuxième organes de mixage du flux d'air agencés dans ledit boîtier pour produire un flux d'air à température ajustée à destination de ladite première et/ou deuxième sortie d'air.

Selon l'invention, ladite installation comporte un dispositif tel que défini précédemment, pour la commande desdits premier et deuxième organes de mixage indépendamment l'un de l'autre, en fonction d'une consigne de température propre, de façon à délivrer un premier flux d'air à une première température ajustée à destination de ladite première sortie d'air et/ou un deuxième flux d'air à une deuxième température ajustée à destination de ladite deuxième sortie d'air.

La première température du premier flux d'air peut être la même ou être différente de la deuxième température du deuxième flux d'air.

Ladite installation peut en outre comporter une ou plusieurs caractéristiques suivantes, prises séparément ou en combinaison.

Selon un aspect de l'invention, ladite installation est destinée à être montée dans un véhicule automobile avec un habitacle présentant au moins deux zones, par exemple gauche et droite, avant et arrière. Ladite installation comprend pour chaque zone, au moins une première sortie d'air de dégivrage et/ou d'aération, et au moins une deuxième sortie d'air au niveau des pieds. Le circuit de commande est configuré pour délivrer des signaux de commande distincts pour le pilotage de chaque organe de mixage, de façon à ajuster indépendamment la température du flux d'air à destination de chaque sortie d'air, dans une région haute et dans une région basse de chaque zone de l'habitacle.

Selon un autre aspect de l'invention, ladite installation comporte au moins un échangeur thermique, tel qu'un évaporateur, un dispositif de chauffage tel qu'un radiateur, et selon une option un dispositif de chauffage électrique additionnel.

Ladite installation peut comporter au moins une paroi de séparation agencée dans un conduit d'air dudit boîtier de façon à séparer le conduit d'air en une première partie comportant ladite au moins une première sortie d'air et une deuxième partie comportant ladite au moins une deuxième sortie d'air. Ledit au moins un premier organe de mixage est agencé dans la première partie du conduit d'air et ledit au moins un deuxième organe de mixage est agencé dans la deuxième partie du conduit d'air.

Selon un mode de réalisation, ladite installation comporte au moins une première et au moins une deuxième chambres de mixage, comprenant chacune au moins un organe de mixage du flux d'air pour produire un flux d'air à température ajustée, et au moins un premier actionneur dudit au moins un premier organe de mixage dans une première chambre de mixage dudit boîtier, et au moins un deuxième actionneur dudit au moins un deuxième organe de mixage dans la deuxième chambre de mixage, configurés pour être pilotés indépendamment l'un de l'autre par le circuit de commande.

Les actionneurs pilotables indépendamment permettent d'ajuster chacun au niveau d'une chambre de mixage associée, la température à destination de la région haute et à destination de la région basse de l'habitacle comme sélectionné par l'utilisateur.

Selon un mode de réalisation, ladite installation comporte pour chaque sortie d'air, au moins un organe de mise en communication avec une chambre de mixage, et au moins un actionneur configuré pour être piloté par le circuit de commande de façon à contrôler le positionnement dudit au moins un organe de mise en communication.

Les organes de mixage peuvent être réalisés sous forme de volets.

Les organes de mise en communication peuvent être réalisés sous forme de volets et/ou de parois fixes ou mobiles.

L'invention concerne aussi un véhicule automobile comportant une installation de chauffage et/ou ventilation et/ou climatisation telle que définie précédemment.

L'invention concerne encore un procédé de gestion de la température dans un habitacle de véhicule automobile par l'intermédiaire d'un dispositif de commande tel que défini précédemment d'une telle installation de chauffage et/ou ventilation et/ou climatisation comportant les étapes suivantes :
- sélectionner, par l'intermédiaire d'au moins un organe de commande, une température d'un flux d'air à délivrer via au moins une sortie d'air associée audit organe de commande,
- recevoir au moins un signal d'entrée dudit organe de commande, et
- délivrer un signal de commande pour le pilotage d'au moins un organe de mixage, de façon à ajuster la température du flux d'air à destination de ladite au moins une sortie d'air associée.

En particulier, ledit procédé peut comporter les étapes suivantes :
- sélectionner, par l'intermédiaire d'un premier organe de commande, une première température d'un premier flux d'air à délivrer via au moins une première sortie d'air,
- sélectionner, par l'intermédiaire d'un deuxième organe de commande, une deuxième température d'un deuxième flux d'air à délivrer via au moins une deuxième sortie d'air,
- recevoir au moins un signal d'entrée du premier organe de commande,
- recevoir au moins un signal d'entrée du deuxième organe de commande,
- délivrer un premier signal de commande pour le pilotage d'au moins un premier organe de mixage, de façon à ajuster la température du premier flux d'air,
- délivrer un deuxième signal de commande, distinct du premier signal de commande, pour le pilotage d'au moins un deuxième organe de mixage, de façon à ajuster la température du deuxième flux d'air.

Un tel procédé permet de sélectionner indépendamment la température souhaitée, ou de personnaliser la température, pour la région haute et basse de l'habitacle, et permet de piloter de façon indépendante les organes de mixage pour délivrer aux sorties d'air une température optimale dans chaque région haute et basse d'une même zone de l'habitacle.

D'autres avantages et caractéristiques de l'invention apparaîtront plus clairement à la lecture de la description suivante donnée à titre d'exemple illustratif et non limitatif, et des dessins annexés parmi lesquels :
[Fig. 1] La figure 1 représente de façon schématique l'intérieur d'un habitacle d'un véhicule automobile muni d'un dispositif de commande d'une installation de chauffage et/ou ventilation et/ou climatisation selon l'invention.
[Fig. 2] La figure 2 représente de façon schématique une interface utilisateur du dispositif de commande.
[Fig. 3] La figure 3 est un schéma fonctionnel montrant l'interaction entre le dispositif de commande et des éléments d'un boîtier de traitement d'air de l'installation, pour une gestion différentiée de la température à destination d'une région haute et d'une région basse de l'habitacle.
[Fig. 4] La figure 4 est une vue en coupe d'un boîtier de traitement d'air de l'installation munis d'échangeurs thermiques et délimitant des chambres de mixage.
[Fig. 5] La figure 5 est une première vue en perspective du boîtier de traitement d'air.
[Fig. 6] La figure 6 est une deuxième vue en perspective du boîtier de traitement d'air.
[Fig. 7] La figure 7 est une représentation schématique montrant le fonctionnement de l'installation pour la distribution d'air dans l'habitacle selon un premier mode.
[Fig. 8] La figure 8 est une représentation schématique montrant le fonctionnement de l'installation pour la distribution d'air dans l'habitacle selon un deuxième mode.

Sur ces figures, les éléments identiques portent les mêmes numéros de référence.

Les réalisations suivantes sont des exemples. Bien que la description se réfère à un ou plusieurs modes de réalisation, ceci ne signifie pas nécessairement que chaque référence concerne le même mode de réalisation, ou que les caractéristiques s'appliquent uniquement à un seul mode de réalisation. De simples caractéristiques de différents modes de réalisation peuvent également être combinées ou interchangées pour fournir d'autres réalisations.

Dans la description, on peut indexer certains éléments, comme par exemple premier élément ou deuxième élément. Dans ce cas, il s'agit d'un simple indexage pour différencier et dénommer des éléments proches mais non identiques. Cette indexation n'implique pas une priorité d'un élément par rapport à un autre et on peut aisément interchanger de telles dénominations sans sortir du cadre de la présente description. Cette indexation n'implique pas non plus un ordre dans le temps.

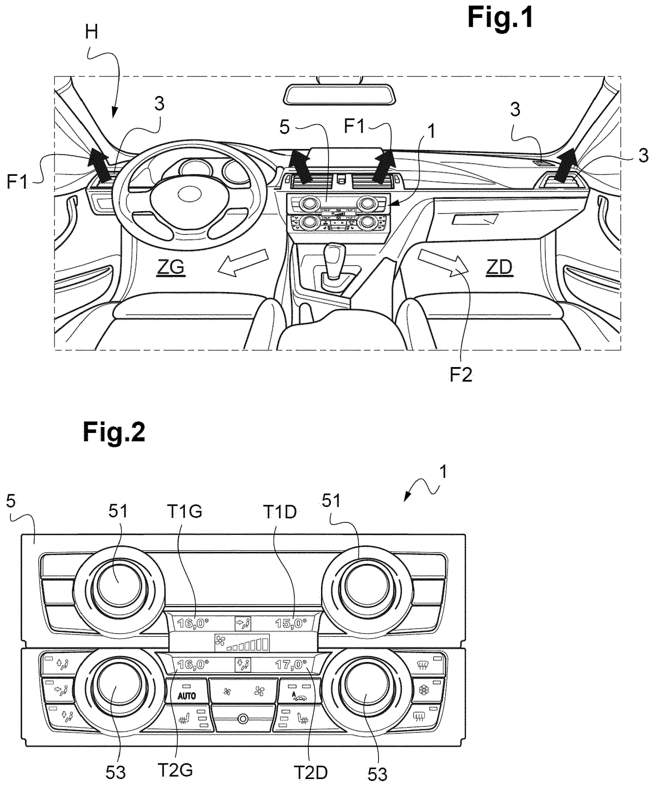

L'invention concerne la gestion du confort thermique dans un habitacle H d'un véhicule automobile schématisé sur la figure 1, à l'aide d'un dispositif de commande 1 d'une installation de chauffage et/ou ventilation et/ou climatisation équipant le véhicule. L'habitacle H peut former une seule zone, ou en variante présenter plusieurs zones, par exemple les zones gauche ZG et droite ZD, et/ou les zones avant et arrière.

Un nombre prédéfini d'aérateurs 3 sont disposés dans l'habitacle H, par exemple dans une région haute et dans une région basse de l'habitacle H, voire dans une région haute et dans une région basse de chaque zone ZG, ZD de l'habitacle H. D'autres positionnements pour les aérateurs 3 non représentés peuvent être envisagés, par exemple sur les côtés.

En fonctionnement de l'installation, un premier flux d'air, schématisé par les flèches F1, peut être délivré à travers les aérateurs 3 en région haute, par exemple vers le pare-brise et vers une partie haute du corps des occupants du véhicule. En variante ou en complément, selon les modes de fonctionnement prévus de l'installation, un deuxième flux d'air, schématisé par les flèches F2, peut être délivré à travers les aérateurs 3 en région basse, vers les pieds des occupants du véhicule.

Le dispositif de commande 1 comporte une interface utilisateur 5 configurée pour être agencée dans l'habitacle H du véhicule. Cette interface utilisateur 5 permet à un occupant du véhicule de sélectionner indépendamment la température souhaitée en région haute ou en région basse de l'habitacle H. Les termes haut et bas sont définis par rapport à un axe vertical non représenté du véhicule automobile.

L'interface utilisateur 5 mieux visible sur la figure 2, présente au moins un premier organe de commande 51 pour le réglage de la température du premier flux d'air et au moins un deuxième organe de commande 53 pour le réglage de la température du deuxième flux d'air.

Chaque paire de premier et deuxième organes de commande 51, 53 peut être dédiée pour la gestion de la température dans une zone donnée de l'habitacle. Selon l'exemple particulier représenté, l'interface utilisateur 5 présente deux premiers organes de commande 51 et deux deuxièmes organes de commande 53. Dans l'exemple illustré, en référence à la disposition des éléments sur la figure 2, les premier et deuxième organes de commande 51, 53 situés à gauche sont dédiés à la gestion de la température dans la zone gauche de l'habitacle, et ceux situés à droite sont dédiés à la gestion de la température dans la zone droite de l'habitacle.

Le ou les premiers organes de commande 51 peuvent être associés à la gestion de la température du premier flux d'air vers une région haute de l'habitacle, par exemple vers le haut du corps des occupants du véhicule. Le ou les deuxièmes organes de commande 53 peuvent être associés à la gestion de la température du deuxième flux d'air vers une région basse de l'habitacle, plus précisément vers les pieds des occupants du véhicule. Par exemple, le conducteur peut à l'aide du premier organe de commande 51 de gauche sélectionner une première température T1G pour la région haute de la zone gauche de l'habitacle et à l'aide du deuxième organe de commande 53 de gauche sélectionner une deuxième température T2G pour la région basse de la zone gauche de l'habitacle. Un passager peut à l'aide du premier organe de commande 51 de droite sélectionner une première température T1D pour la région haute de la zone droite de l'habitacle et à l'aide du deuxième organe de commande 53 de droite sélectionner une deuxième température T2D pour la région basse de la zone droite de l'habitacle. Les premières et deuxièmes températures T1G, T2G et T1D, T2D sélectionnées peuvent être identiques ou être différentes.

Chaque organe de commande 51, 53 peut par exemple être réalisé sous forme de bouton rotatif. En variante, il peut s'agir d'une surface tactile, telle qu'un écran tactile, ou encore un pavé tactile.

L'interface utilisateur 5 peut également présenter au moins un organe de commande pour l'activation de différents modes de fonctionnement de l'installation, notamment pour une gestion dépendante ou séparée du flux d'air à destination des différentes zones de l'habitacle ou des régions haute et basse d'une zone donnée.

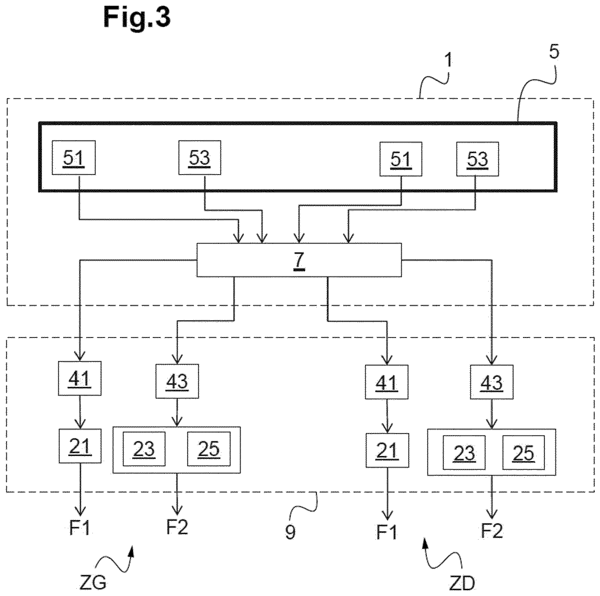

Comme schématisé sur la figure 3, le dispositif de commande 1 comporte en outre un circuit de commande 7 relié en entrée à l'interface utilisateur 5. Il peut ainsi recevoir des signaux d'entrée de l'interface utilisateur 5. En particulier, il peut recevoir un signal d'entrée de chaque organe de commande 51, 53, avec une consigne de température propre. Le circuit de commande 7 est relié en sortie à des éléments à piloter décrits plus en détail par la suite.

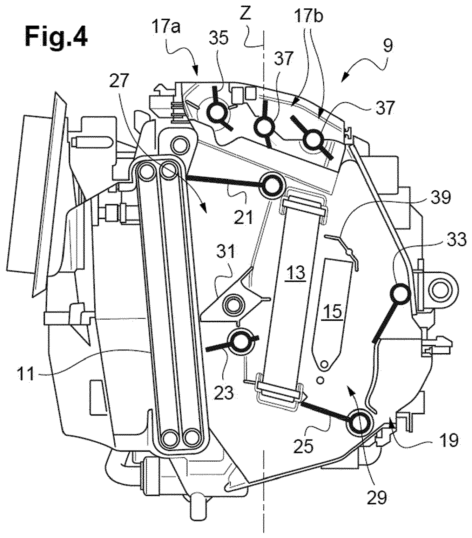

En particulier, il s'agit d'éléments reçus dans un boîtier de traitement d'air 9 de l'installation. On a représenté sur la figure 4 un tel boîtier de traitement d'air 9 configuré pour traiter thermiquement le flux d'air en provenance d'un boîtier d'entrée d'air de l'installation par exemple.

À cet effet, le boîtier de traitement d'air 9 délimite au moins un conduit d'air dans lequel sont disposés un ou plusieurs moyens de traitement thermique, tels que des échangeurs thermiques, pour réchauffer et/ou refroidir le flux d'air préalablement à sa distribution à l'intérieur de l'habitacle. À titre d'exemple, les échangeurs thermiques peuvent comprendre un évaporateur 11 destiné à refroidir et déshumidifier le flux d'air le traversant, ainsi qu'un dispositif de chauffage, notamment un radiateur 13, éventuellement associé à un dispositif de chauffage électrique, aussi appelé radiateur additionnel 15, destinés à réchauffer le flux d'air. Les dispositifs de chauffage 13, 15 sont disposés en aval de l'évaporateur 11 selon le sens d'écoulement du flux d'air.

Le boîtier de traitement d'air 9 présente au moins une première sortie d'air 17a, 17b et au moins une deuxième sortie d'air 19. Les sorties d'air 17a, 17b, 19 peuvent comprendre des conduits de sortie d'air aboutissant à différentes bouches ou buses ou aérateurs disposés en des endroits choisis de l'habitacle.

Selon le mode de réalisation décrit, lorsque le boîtier de traitement d'air 9 est monté dans le véhicule, la ou les premières sorties d'air 17a, 17b sont destinées à déboucher au niveau d'une région haute dans l'habitacle. Il s'agit par exemple d'une sortie de dégivrage ou désembuage 17a à destination d'un aérateur ou d'une buse permettant de dégivrer/désembuer le pare-brise, et d'une ou plusieurs sorties d'aération 17b à destination d'aérateurs ou de buses de ventilation orientées vers les parties hautes des occupants du véhicule, telles que le visage ou le haut du corps. La ou les deuxièmes sorties d'air 19 sont destinées à déboucher au niveau d'une région basse dans l'habitacle. Il s'agit notamment de sorties d'air 19 destinées à déboucher au niveau des pieds des occupants du véhicule.

Des organes de mixage 21, 23, 25 sont agencés dans le boîtier de traitement d'air 9 pour ajuster la température du flux d'air destiné à être distribué. Pour ce faire, ces organes de mixage 21, 23, 25 sont pilotés de manière à définir la proportion de flux d'air froid et de flux d'air chaud à distribuer à l'intérieur de l'habitacle. Il s'agit par exemple de volets de mixage montés mobiles entre au moins deux positions extrêmes.

L'installation comporte en particulier au moins un premier organe de mixage 21 du flux d'air agencé dans le boîtier de traitement d'air 9 pour produire le premier flux d'air à température ajustée à destination d'au moins une des premières sorties d'air 17a, 17b. L'installation comporte également au moins un deuxième organe de mixage 23, 25 du flux d'air agencé dans le boîtier de traitement d'air 9 pour produire le deuxième flux d'air à température ajustée à destination d'au moins une deuxième sortie d'air 19.

Avantageusement, l'installation comporte au moins une première chambre de mixage 27 et au moins une deuxième chambre de mixage 29. Chaque chambre de mixage 27, 29 est pourvue d'au moins un organe de mixage 21, 23, 25 pour définir la proportion d'un ou plusieurs flux d'air froid et/ou chaud pénétrant dans la chambre de mixage 27, 29 respective. Chaque chambre de mixage 27, 29 sert à mélanger les flux d'air, de sorte que le flux d'air issu du mélange, ayant la température de consigne souhaitée, soit distribué vers l'habitacle du véhicule automobile.

La première chambre de mixage 27 est prévue dans une partie haute du boîtier de traitement d'air 9 tandis que la deuxième chambre de mixage 29 est prévue dans une partie basse. Les termes « haute » et « basse » sont définis en référence à l'axe Z représenté sur la figure 4, formant un axe vertical.

En particulier, la première chambre de mixage 27 est prévue en aval de l'évaporateur 11 selon le sens d'écoulement du flux d'air. Ainsi, en fonctionnement, le flux d'air admis à l'intérieur du boîtier de traitement d'air 9 traverse l'évaporateur 11, puis, peut être admis dans la première chambre de mixage 27 et/ou être orienté vers le radiateur 13 et éventuellement le radiateur additionnel 15, pour obtenir un flux d'air chaud.

La première chambre de mixage 27 est pourvue du premier organe de mixage 21, tel qu'un volet, afin de définir la proportion du flux d'air froid et du flux d'air chaud pénétrant dans la première chambre de mixage 27. Cet organe de mixage 21 permet ainsi d'ajuster la température du flux d'air mélangé destiné à être distribué.

La deuxième chambre de mixage 29 est agencée en communication aéraulique avec le ou les dispositifs de chauffage 13, 15. La deuxième chambre de mixage 29 est équipée du ou des deuxièmes organes de mixage 23, 25, tel que des volets, afin de définir la proportion du flux d'air froid et du flux d'air chaud pénétrant dans la deuxième chambre de mixage 29 pour ajuster la température du flux d'air destiné à être distribué.

Dans l'exemple illustré, le premier organe de mixage 21 et l'un des deuxièmes organes de mixage, ici l'organe de mixage 23, sont positionnés en amont du radiateur 13. En alternative, ils peuvent être positionnés en aval du radiateur 13.

Selon au moins un mode de fonctionnement de l'installation, la première chambre de mixage 27 peut alimenter l'une ou les premières sorties d'air 17a, 17b en un flux d'air à température ajustée à destination de la région haute de l'habitacle ou d'une zone donnée de l'habitacle, tandis que la deuxième chambre de mixage 29 peut alimenter la deuxième sortie d'air 19 dite sortie pieds en un flux d'air à température ajustée à destination de la région basse de l'habitacle ou de la zone donnée de l'habitacle.

Comme dit précédemment, l'aération des régions haute et basse de l'habitacle ou de chaque zone de l'habitacle peut se faire selon une commande distincte. Autrement dit, un utilisateur peut commander une première température de consigne pour le premier flux d'air issu de la première chambre de mixage 27, et peut commander une deuxième température de consigne différente pour le deuxième flux d'air issu de la deuxième chambre de mixage 29.

Un élément de séparation 31 peut être agencé dans le boîtier de traitement d'air 9, de façon à séparer le flux d'air issu de l'évaporateur 11 en deux flux d'air distincts, chacun étant destiné à être orienté vers une chambre de mixage spécifique 27, 29. Chaque flux d'air peut traverser une partie du radiateur 13 ou le contourner avant d'aboutir à la chambre de mixage 27, 29 respective, dans les proportions adéquates pour garantir les températures de consigne respectives. L'élément de séparation 31 est agencé en aval de l'évaporateur 11 et en amont du radiateur 13, selon le sens d'écoulement du flux d'air. L'élément de séparation 31 peut par exemple être situé sensiblement au niveau du milieu de la hauteur, selon l'axe Z, de l'évaporateur 11. L'élément de séparation 31 peut par exemple être formé par un ensemble de parois reliées entre elles. En alternative, une unique paroi peut être prévue.

Afin de pouvoir mettre en communication les deux chambres de mixage 27, 29 ou les rendre indépendantes l'une de l'autre, un autre organe de séparation, tel qu'un volet de séparation 33, peut être agencé entre les deux chambres de mixage 27, 29. À cet effet, le volet de séparation 33 est par exemple agencé mobile entre une première position extrême mettant en communication les deux chambres de mixage 27, 29, et une deuxième position extrême isolant les deux chambres de mixage 27, 29. Le volet de séparation 33 est disposé en aval du radiateur 13 ou du radiateur additionnel 15 lorsqu'il est prévu.

Lorsque le volet 33 est dans la deuxième position, le volet 33 et l'élément de séparation 31 permettent de séparer le conduit d'air en une première partie haute comportant les premières sorties d'air 17a, 17b et une deuxième partie basse comportant la deuxième sortie d'air 19. La première chambre de mixage 27 et le premier organe de mixage 21 sont dans la première partie du conduit d'air. La deuxième chambre de mixage 29 et les deuxièmes organes de mixage 23, 25 sont agencés dans la deuxième partie du conduit d'air.

De plus, un ou plusieurs organes de mise en communication, tels que des volets et/ou des parois fixes ou mobiles, peuvent être prévus de façon à mettre en communication les sorties d'air 17a, 17b, 19 avec une chambre de mixage 27, 29. Les volets 33, 35, 37 sont agencés de façon à contrôler ou bloquer l'accès des flux d'air aux différentes sorties d'air 17a, 17b, 19. Le volet de séparation 33 peut par exemple être configuré pour bloquer l'accès à la deuxième sortie d'air 19 lorsqu'il est dans la position première position extrême mettant en communication les deux chambres de mixage 27, 29. Selon ce mode de réalisation, le volet 33 assure une double fonction de séparation des chambres de mixage et d'ouverture / fermeture de la sortie. Bien entendu, les fonctions peuvent être séparées, c'est-à-dire réalisées par des éléments différents.

Selon un exemple de réalisation particulier, un déflecteur 39, telle qu'une nervure, peut être prévu dans le boîtier de traitement d'air 9. Le déflecteur 39 peut par exemple être destiné à coopérer avec le volet de séparation 33 dans au moins un mode de fonctionnement de l'installation, tel qu'un mode double ventilation / pieds. Lorsque le volet de séparation 33 est dans une position extrême mettant en communication la deuxième sortie d'air 19 avec la deuxième chambre de mixage 29 et assurant une séparation entre les deux chambres de mixage 27, 29, le volet de séparation 33 vient en appui contre le déflecteur 39. Dans cette position, le flux d'air en sortie du radiateur 13 peut aboutir dans la première chambre de mixage 27 sans traverser au préalable le radiateur additionnel 15.

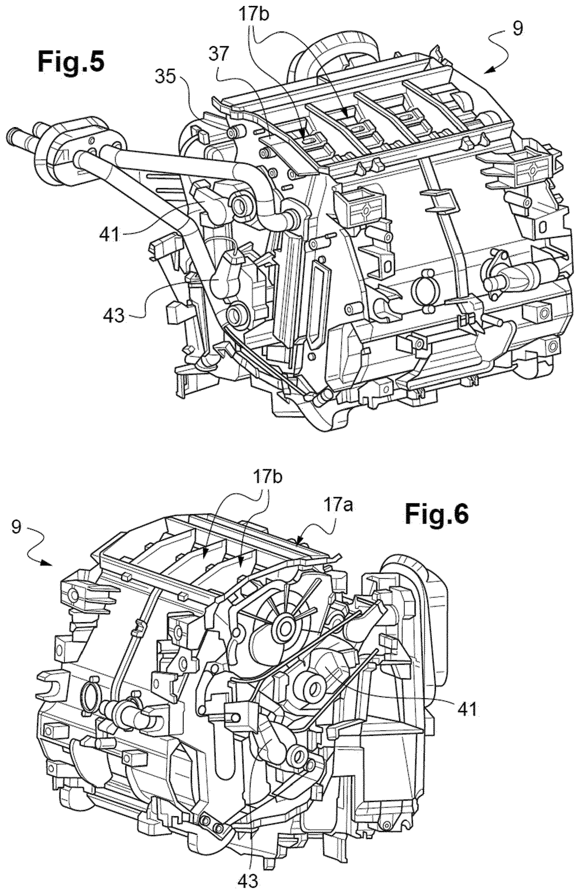

Afin de mettre en mouvement les volets de mixage 21, 23, 25, l'installation comporte des actionneurs correspondants. En référence aux figures 4 à 6, un premier actionneur 41 est configuré pour mettre en mouvement le premier organe de mixage 21. Au moins un deuxième actionneur 43 est configuré pour mettre en mouvement le ou les deuxièmes organes de mixage 23, 25. Le premier 41 et le deuxième 43 actionneurs sont configurés pour être pilotés indépendamment l'un de l'autre via le circuit de commande 7 (figure 3). Les actionneurs 41, respectivement 43, pilotables indépendamment permettent d'ajuster chacun la température du flux d'air au niveau de la chambre de mixage 27, respectivement 29, associée.

Dans un véhicule permettant une gestion séparée pour deux zones de l'habitacle, par exemple avec une distincte gauche droite, on peut prévoir au moins quatre actionneurs 41, 43, avec au moins un premier et un deuxième actionneurs 41, 43 pour chaque zone.

Un nombre prédéfini d'actionneurs peut également être prévu pour contrôler le positionnement des volets 33 à 37.

En se référant de nouveau aux figures 3 et 4, le circuit de commande 7 est configuré pour délivrer des signaux de commande distincts pour le pilotage du premier organe de mixage indépendamment du pilotage du ou des deuxièmes organes de mixage 23, 25, en fonction d'une consigne de température propre, de façon à ajuster indépendamment la température premier du flux d'air à destination des premières sorties d'air 17a, 17b et du deuxième flux d'air à destination de la deuxième sortie d'air 19. Plus précisément, le circuit de commande 7 est configuré pour délivrer des signaux de commande distincts pour le pilotage de chaque actionneur 41, 43, de façon à contrôler le positionnement des organes de mixage 21, 23, 25.

Le circuit de commande 7 est de plus configuré pour recevoir au moins un signal d'entrée d'activation d'un mode de fonctionnement de l'installation. Par exemple, un utilisateur peut sélectionner un mode double, haut/bas, pour une gestion séparée du flux d'air à destination de l'une ou des premières sorties d'air 17a, 17b, et de la deuxième sortie d'air 19. Dans ce cas, le circuit de commande 7 peut délivrer au moins un signal de commande pour piloter le déplacement du volet 33 dans une position de séparation des première et deuxième chambres de mixage 27, 29, de façon à les rendre indépendantes.

Le circuit de commande 7 est également configuré pour délivrer au moins un signal de commande pour contrôler le positionnement des volets 33 à 37 au niveau de chaque sortie d'air 17a, 17b, 19, de sorte que la première chambre de mixage 27 communique avec l'une ou les premières sorties d'air 17a, 17b, et que la deuxième chambre de mixage 29 communique avec la deuxième sortie d'air 19. Selon l'exemple décrit, le volet de séparation 33 peut être lié aux volets 35 et 37. En alternative, il peut être indépendant de ces derniers et assurer seulement la fonction de séparation des chambres de mixage 27, 29. Dans ce cas, un volet additionnel peut être prévu au niveau de la deuxième sortie d'air 19, formant ainsi un volet « pied » et peut être lié par une cinématique aux volets 35 et 37.

Ainsi, en référence à l'ensemble des figures, la température à l'intérieur de l'habitacle H peut être contrôlée par l'intermédiaire du dispositif de commande 1, selon un procédé de gestion, comportant les étapes développées ci-après.

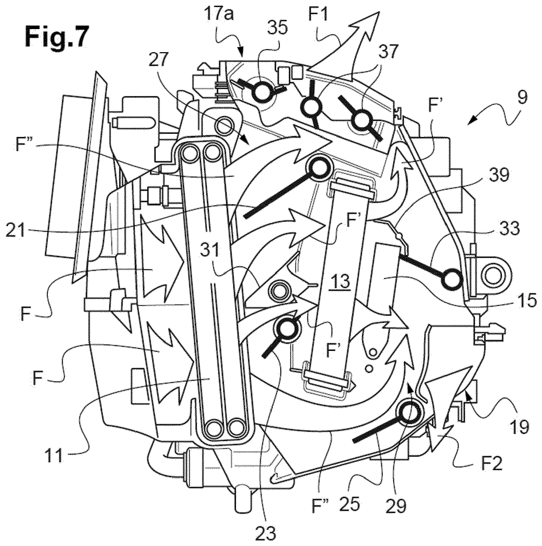

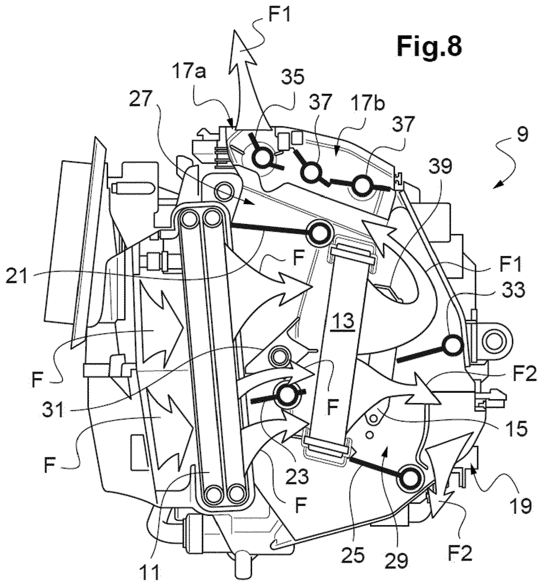

On peut prévoir une étape préliminaire dans laquelle un utilisateur peut sélectionner un mode de fonctionnement double de l'installation avec une gestion séparée du premier flux d'air au niveau de l'une ou des premières sorties d'air 17a, 17b, et du deuxième flux d'air F2 au niveau de la deuxième sortie d'air 19. Cette étape peut être réalisée par l'intermédiaire de l'interface utilisateur 5. Dans ce cas, le circuit de commande 7 peut délivrer au moins un signal de commande pour piloter le déplacement du volet de séparation 33 dans une position de séparation des première et deuxième chambres de mixage 27, 29, de façon à les rendre indépendantes, comme illustré sur la figure 7 ou 8.

Il peut s'agir par exemple d'un premier mode de fonctionnement double, haut/bas, par exemple ventilation/pieds, avec une gestion séparée pour refroidir/réchauffer le flux d'air à destination de l'une ou de premières sorties de ventilation 17b destinées à être orientées vers le visage ou le haut du corps des occupants, et du flux d'air à destination de la deuxième sortie d'air 19 vers les pieds de (figure 7). Dans ce cas, le volet 35 est piloté de façon à être placé dans une position pour bloquer l'accès à la sortie de dégivrage ou désembuage 17a. Les volets 37 peuvent être pilotés pour prendre des positions permettant de mettre en communication les sorties de ventilation 17b avec la première chambre de communication 27. Selon ce premier mode de fonctionnement, le volet de séparation 33 peut être piloté dans une position dans laquelle il libère l'accès de la deuxième sortie d'air 19 en venant en appui contre le déflecteur 39.

Il peut en variante s'agir d'un deuxième mode de fonctionnement, désembuage/dégivrage et pieds, avec une gestion séparée du flux d'air à destination de la première sortie de dégivrage ou désembuage 17a, et du flux d'air à destination de la deuxième sortie d'air 19 vers les pieds des occupants (figure 8). Dans ce cas, le volet 35 est piloté de façon à être placé dans une position pour mettre en communication la sortie de dégivrage ou désembuage 17a avec la première chambre de communication 27. Les volets 37 peuvent être pilotés pour prendre des positions permettant de bloquer l'accès aux sorties de ventilation 17b. Selon ce deuxième mode de fonctionnement, le volet de séparation 33 peut être piloté dans une position d'ouverture intermédiaire dans laquelle il libère l'accès de la deuxième sortie d'air 19 sans venir en appui contre le déflecteur 39.

Un utilisateur, tel que le conducteur ou un passager, peut sélectionner, par l'intermédiaire d'au moins un organe de commande 51, 53, une température d'un flux d'air à délivrer via au moins une sortie d'air 17a, 17b, 19 associée à l'organe de commande 51, 53. Par exemple, l'utilisateur peut sélectionner, par l'intermédiaire d'un premier organe de commande 51, une première température T1G, T1D, du premier flux d'air F1 à délivrer via une première sortie d'air 17a lorsqu'un dégivrage ou désembuage est souhaité (figure 8), et/ou une première sortie d'air 17b pour une ventilation orientée vers le visage ou le haut du corps de l'utilisateur (figure 7). L'utilisateur peut sélectionner, par l'intermédiaire d'un deuxième organe de commande 53, une deuxième température T2G, T2D, du deuxième flux d'air F2 à délivrer via une deuxième sortie d'air 19 pour une ventilation orientée vers les pieds de l'utilisateur.

Le circuit de commande 7 peut recevoir le ou les signaux d'entrée du ou de chaque organe de commande 51, 53 actionnée par l'utilisateur, et délivrer au moins un signal de commande pour le pilotage d'un organe de mixage, de façon à ajuster la température du flux d'air à destination de la sortie d'air associée.

Lorsqu'un premier organe de commande 51 est actionné, le circuit de commande 7 peut délivrer un premier signal de commande pour le pilotage du premier organe de mixage 21, de façon à ajuster la température du premier flux d'air à destination de la première sortie d'air 17a (figure 8) et/ou 17b (figure 7).

Lorsqu'un deuxième organe de commande 53 est actionné, le circuit de commande 7 peut délivrer un deuxième signal de commande, distinct du premier signal de commande, pour le pilotage d'au moins un deuxième organe de mixage 23, 25, de façon à ajuster la température du deuxième flux d'air F2 à destination de la deuxième sortie d'air 19.

Ainsi, selon le premier mode de fonctionnement de la figure 7, un flux d'air F admis dans le boîtier de traitement d'air 9 peut traverser l'évaporateur 11. Le premier volet de mixage 21 peut être piloté de sorte qu'en sortie de l'évaporateur 11, une partie du flux d'air F' peut être orientée vers le radiateur 13 pour le traverser afin d'être réchauffée avant d'aboutir sur la première chambre de mixage 27 et une autre partie du flux d'air F" froid en sortie de l'évaporateur 11 peut être orientée directement vers la première chambre de mixage 27 sans traverser le radiateur 13. Les flux d'air chaud et froid sont mélangés dans la première chambre de mixage 27. Le premier flux d'air F1 issu du mélange est à une première température ajustée et peut être distribué via les premières sorties d'air 17b de ventilation.

Les deuxièmes volets de mixage 23, 25 peuvent être pilotés de sorte qu'en sortie de l'évaporateur 11, une partie du flux d'air F' peut être orientée vers le radiateur 13 pour traverser le radiateur 13 et le radiateur additionnel 15 afin d'être réchauffée avant d'aboutir sur la deuxième chambre de mixage 29. Une autre partie du flux d'air F" froid en sortie de l'évaporateur 11 peut être orientée directement vers la deuxième chambre de mixage 29 en contournant le radiateur 13. Les flux d'air chaud F' et froid F" sont mélangés dans la deuxième chambre de mixage 29. Le deuxième flux d'air F2 issu du mélange est à une deuxième température ajustée et peut être distribué via la deuxième sortie d'air 19.

La température du premier flux d'air F1 peut être la même ou être différente de celle du deuxième flux d'air F2.

Selon le deuxième mode de fonctionnement de la figure 8, comme précédemment le flux d'air F admis dans le boîtier de traitement d'air 9 peut traverser l'évaporateur 11. Le premier volet de mixage 21 peut être piloté de sorte que le flux d'air en sortie de l'évaporateur 11 est orienté vers le radiateur 13 pour le traverser afin d'être réchauffé. Le premier flux d'air F1 chaud peut ensuite aboutir sur la première chambre de mixage 27 et être distribué via la première sortie d'air de dégivrage ou désembuage 17a.

Les deuxièmes volets de mixage 23, 25 peuvent être pilotés de sorte qu'en sortie de l'évaporateur 11, le flux d'air F peut être orientée vers le radiateur 13 pour le traverser afin d'être réchauffé. Le deuxième flux d'air F2 chaud peut ensuite aboutir sur la deuxième chambre de mixage 29 et être distribué via la deuxième sortie d'air 19.

Ainsi, le flux d'air F en amont du radiateur 13 est séparé par la cloison 31 en amont du radiateur 13. Et en aval du radiateur 13, on obtient les deux flux d'air F1 et F2 séparés par le volet 33.

Comme pour le premier mode de réalisation, la température du premier flux d'air F1 peut être la même ou être différente de celle du deuxième flux d'air F2.

Chacune de ces étapes du procédé peut être réalisée pour une ou plusieurs zones ZG, ZD, de l'habitacle H.

On comprend donc qu'un dispositif de commande 1 tel que décrit précédemment permet un contrôle en température indépendant pour le premier flux d'air F1 délivré via les premières sorties d'air de dégivrage 17a et/ou d'aération 17b, débouchant dans une région haute de l'habitacle H, et pour le deuxième flux d'air F2 délivré via la deuxième sortie d'air 19 débouchant dans une région basse du véhicule au niveau des pieds. L'utilisateur a ainsi la possibilité de régler lui-même et de choisir la température qu'il souhaite en haut et en bas pour une zone de l'habitacle ou pour chaque zone de l'habitacle.

L'invention décrite s'applique en particulier pour une installation permettant une séparation gauche droite et/ou avant arrière, permettant un contrôle en température indépendant des régions haute et basse de chaque zone ZG, ZD de l'habitacle H.

## Revendications

1. Dispositif (1) de commande pour une installation de chauffage et/ou ventilation et/ou climatisation de véhicule automobile comprenant un habitacle (H), ladite installation comprenant un boîtier de traitement d'air (9) comportant :
- au moins deux sorties d'air (17a, 17b, 19) destinées à déboucher dans une zone (ZG, ZD) de l'habitacle (H) dont au moins première sortie d'air de dégivrage et/ou d'aération (17a, 17b) et au moins une deuxième sortie d'air (19) au niveau des pieds, et
- au moins un premier (21) et au moins un deuxième (23, 25) organes de mixage du flux d'air pour produire un flux d'air à température ajustée à destination de ladite première et/ou deuxième sortie d'air (17a, 17b, 19), **caractérisé en ce que** ledit dispositif (1) comporte :
- une interface utilisateur (5) configurée pour être agencée dans l'habitacle (H), comprenant au moins un premier organe de commande (51) pour le réglage de la température d'un premier flux d'air (F1) à destination de ladite première sortie d'air (17a, 17b) et au moins un deuxième organe de commande (53) pour le réglage de la température d'un deuxième flux d'air (F2) à destination de ladite deuxième sortie d'air (19), et
- un circuit de commande (7) configuré pour :
recevoir, de chaque organe de commande (51, 53), un signal d'entrée avec une consigne de température propre, et pour
délivrer des signaux de commande distincts pour le pilotage desdits premier et deuxième organes de mixage (21, 23, 25), de façon à ajuster indépendamment la température des premier et deuxième flux d'air (F1, F2) à destination respectivement de ladite première (17a, 17b) et de ladite deuxième (19) sorties d'air.

2. Dispositif (1) selon la revendication précédente, dans lequel l'interface utilisateur (5) est configurée pour être agencée dans un habitacle (H) présentant au moins deux zones (ZG, ZD), et comprend :
- au moins deux premiers organes commande (51) pour le réglage de la température d'un premier flux d'air (F1) à destination d'au moins une première sortie d'air (17a, 17b) pour chaque zone (ZG, ZD) de l'habitacle (H), et
- au moins deux deuxièmes organes de commande (53) pour le réglage de la température d'un deuxième flux d'air (F2) à destination d'au moins une deuxième sortie d'air (19) pour chaque zone (ZG, ZD) de l'habitacle (H).

3. Dispositif (1) selon l'une des revendications précédentes, dans lequel le circuit de commande (7) est configuré pour délivrer des signaux de commande distincts pour le pilotage de façon indépendante :
- d'au moins un premier actionneur (41) dudit au moins un premier organe de mixage (21) dans une première chambre de mixage (27) dudit boîtier (9), et
- d'au moins un deuxième actionneur (43) dudit au moins un deuxième organe de mixage (23, 25) dans une deuxième chambre de mixage (29) dudit boîtier (9).

4. Dispositif (1) selon l'une quelconque des revendications précédentes, dans lequel les organes de commande (51, 53) sont choisis parmi au moins un bouton de réglage, un écran tactile, un pavé tactile.

5. Installation de chauffage et/ou ventilation et/ou climatisation de véhicule automobile comportant :
- un boîtier de traitement d'air (9) comportant au moins deux sorties d'air (17a, 17b, 19) destinées à débouchées dans une zone (ZG, ZD) de l'habitacle (H) dont au moins première sortie d'air de dégivrage et/ou d'aération (17a, 17b) et au moins une deuxième sortie d'air (19) au niveau des pieds, et
- au moins un premier (21) et un deuxième (23, 25) organes de mixage du flux d'air agencés dans ledit boîtier (9) pour produire un flux d'air (F1, F2) à température ajustée à destination de ladite première (17a, 17b) et/ou deuxième (19) sortie d'air,
**caractérisée en ce que** ladite installation comporte un dispositif (1) de commande selon l'une quelconque des revendications précédentes pour la commande desdits premier (21) et deuxième (23, 25) organes de mixage indépendamment l'un de l'autre, en fonction d'une consigne de température propre, de façon à délivrer un premier flux d'air (F1) à une première température ajustée à destination de ladite première sortie d'air (17a, 17b) et/ou un deuxième flux d'air (F2) à une deuxième température ajustée à destination de ladite deuxième sortie d'air (19).

6. Installation selon la revendication précédente, comportant au moins une paroi de séparation (31) agencée dans un conduit d'air dudit boîtier (9) de façon à séparer le conduit d'air en une première partie comportant ladite au moins une première sortie d'air (17a, 17b) et une deuxième partie comportant ladite au moins une deuxième sortie d'air (19), et dans laquelle ledit au moins un premier organe de mixage (21) est agencé dans la première partie du conduit d'air et ledit au moins un deuxième organe de mixage (23, 25) est agencé dans la deuxième partie du conduit d'air.

7. Installation selon l'une des revendications précédentes, comportant :
- au moins une première (27) et au moins une deuxième (29) chambres de mixage, comprenant chacune au moins un organe de mixage (21, 23, 25) du flux d'air pour produire un flux d'air à température ajustée, et
- au moins un premier actionneur (41) dudit au moins premier organe de mixage (21) dans une première chambre de mixage (27) dudit boîtier (9), et au moins un deuxième actionneur (43) dudit au moins un deuxième organe de mixage (23, 25) dans la deuxième chambre de mixage (29), configurés pour être pilotés indépendamment l'un de l'autre par le circuit de commande (7).

8. Installation selon la revendication précédente, comportant :
- pour chaque sortie d'air (17a, 17b, 19), au moins un organe de mise en communication (33, 35, 37) avec une chambre de mixage (27, 29), et
- au moins un actionneur (41, 43) configuré pour être piloté par le circuit de commande (7) de façon à contrôler le positionnement dudit au moins un organe de mise en communication (33, 35, 37).

9. Véhicule automobile comprenant une installation selon l'une quelconque des revendications 5 à 8.

10. Procédé de gestion de la température dans un habitacle (H) de véhicule automobile par l'intermédiaire d'un dispositif de commande (1) selon l'une quelconque des revendications 1 à 4 d'une installation de chauffage et/ou ventilation et/ou climatisation selon l'une quelconque des revendications 5 à 8,
**caractérisé en ce que** ledit procédé comporte les étapes suivantes :
- sélectionner, par l'intermédiaire d'au moins un organe de commande (51, 53), une température d'un flux d'air (F1, F2) à délivrer via au moins une sortie d'air (17a, 17b, 19) associée audit organe de commande (51, 53),
- recevoir au moins un signal d'entrée dudit organe de commande (51, 53), et
- délivrer un signal de commande pour le pilotage d'au moins un organe de mixage (21, 23, 25), de façon à ajuster la température du flux d'air (F1, F2) à destination de ladite au moins une sortie d'air associée (17a, 17b, 19).

## Patentansprüche

1. Steuervorrichtung (1) für eine Heizungs- und/oder Lüftungs- und/oder Klimatisierungsanlage eines Kraftfahrzeugs mit einem Fahrgastraum (H), wobei die Anlage ein Luftbehandlungsgehäuse (9) umfasst, das Folgendes aufweist:
- mindestens zwei Luftauslässe (17a, 17b, 19), die dazu bestimmt sind, in einen Bereich (ZG, ZD) des Fahrgastraums (H) zu münden, darunter mindestens ein erster Enteisungs- und/oder Belüftungsauslass (17a, 17b) und mindestens ein zweiter Luftauslass (19) im Bereich der Füße, und
- mindestens ein erstes (21) und mindestens ein zweites Luftstrommischorgan (23, 25), um einen temperaturgeregelten Luftstrom zum ersten und/oder zweiten Luftauslass (17a, 17b, 19) zu erzeugen, **dadurch gekennzeichnet, dass** die Vorrichtung (1) Folgendes aufweist:
- eine Benutzerschnittstelle (5), die dazu ausgelegt ist, im Fahrgastraum (H) angeordnet zu sein, und mindestens ein erstes Steuerorgan (51) zur Regelung der Temperatur eines ersten Luftstroms (F1) zum ersten Luftauslass (17a, 17b) und mindestens ein zweites Steuerorgan (53) zur Regelung der Temperatur eines zweiten Luftstroms (F2) zum zweiten Luftauslass (19) umfasst, und
- eine Steuerschaltung (7), die dazu ausgelegt ist: von jedem Steuerorgan (51, 53) ein Eingangssignal mit einem eigenen Temperatursollwert zu empfangen und separate Steuersignale zur Ansteuerung des ersten und des zweiten Mischorgans (21, 23, 25) auszugeben, um die Temperatur des ersten und des zweiten Luftstroms (F1, F2) zum ersten (17a, 17b) bzw. zum zweiten Luftauslass (19) unabhängig einzustellen.

2. Vorrichtung (1) nach dem vorangehenden Anspruch, wobei die Benutzerschnittstelle (5) dazu ausgelegt ist, in einem Fahrgastraum (H) angeordnet zu sein, der mindestens zwei Bereiche (ZG, ZD) aufweist, und Folgendes umfasst:
- mindestens zwei erste Steuerorgane (51) zur Regelung der Temperatur eines ersten Luftstroms (F1) zu dem mindestens einen ersten Luftauslass (17a, 17b) für jeden Bereich (ZG, ZD) des Fahrgastraums (H) und
- mindestens zwei zweite Steuerorgane (53) zur Regelung der Temperatur eines zweiten Luftstroms (F2) zu dem mindestens einen zweiten Luftauslass (19) für jeden Bereich (ZG, ZD) des Fahrgastraums (H).

3. Vorrichtung (1) nach einem der vorangehenden Ansprüche, wobei die Steuerschaltung (7) dazu ausgelegt ist, separate Steuersignale zur unabhängigen Ansteuerung:
- mindestens eines ersten Aktuators (41) des mindestens einen ersten Mischorgans (21) in einer ersten Mischkammer (27) des Gehäuses (9) und
- mindestens eines zweiten Aktuators (43) des mindestens einen zweiten Mischorgans (23, 25) in einer zweiten Mischkammer (29) des Gehäuses (9) bereitzustellen.

4. Vorrichtung (1) nach einem der vorangehenden Ansprüche, wobei die Steuerorgane (51, 53) aus mindestens einem Einstellknopf, einem Touchscreen und einem Touchpad ausgewählt sind.

5. Heizungs- und/oder Lüftungs- und/oder Klimatisierungsanlage für ein Kraftfahrzeug, umfassend:
- ein Luftbehandlungsgehäuse (9) mit mindestens zwei Luftauslässen (17a, 17b, 19), die dazu bestimmt sind, in einen Bereich (ZG, ZD) des Fahrgastraums (H) zu münden, darunter mindestens ein erster Enteisungs- und/oder Belüftungsauslass (17a, 17b) und mindestens ein zweiter Luftauslass (19) im Bereich der Füße, und
- mindestens ein erstes (21) und ein zweites Luftstrommischorgan (23, 25), die im Gehäuse (9) angeordnet sind, um einen temperaturgeregelten Luftstrom (F1, F2) zum ersten (17a, 17b) und/oder zweiten Luftauslass (19) zu erzeugen,
**dadurch gekennzeichnet, dass** die Anlage eine Steuervorrichtung (1) nach einem der vorangehenden Ansprüche umfasst, um das erste (21) und das zweite Mischorgan (23, 25) in Abhängigkeit von einem eigenen Temperatursollwert unabhängig voneinander zu steuern, um einen ersten Luftstrom (F1) mit einer ersten eingestellten Temperatur zum ersten Luftauslass (17a, 17b) und/oder einen zweiten Luftstrom (F2) mit einer zweiten eingestellten Temperatur zum zweiten Luftauslass (19) zu transportieren.

6. Installation nach dem vorangehenden Anspruch, mit mindestens einer Trennwand (31), die in einem Luftkanal des Gehäuses (9) so angeordnet ist, dass sie den Luftkanal in einen ersten Teil mit dem mindestens einen ersten Luftauslass (17a, 17b) und einen zweiten Teil mit dem mindestens einen zweiten Luftauslass (19) unterteilt, und wobei das mindestens eine erste Mischorgan (21) im ersten Teil des Luftkanals angeordnet ist und das mindestens eine zweite Mischorgan (23, 25) im zweiten Teil des Luftkanals angeordnet ist.

7. Anlage nach einem der vorangehenden Ansprüche, umfassend:
- mindestens eine erste (27) und mindestens eine zweite Mischkammer (29) mit jeweils mindestens einem Organ (21, 23, 25) zum Mischen des Luftstroms, um einen temperaturgeregelten Luftstrom zu erzeugen, und
- mindestens einen ersten Aktuator (41) des mindestens einen ersten Mischorgans (21) in einer ersten Mischkammer (27) des Gehäuses (9), und mindestens einen zweiten Aktuator (43) des mindestens einen zweiten Mischorgans (23, 25) in der zweiten Mischkammer (29), die dazu ausgelegt sind, unabhängig voneinander durch die Steuerschaltung (7) angesteuert zu werden.

8. Anlage nach dem vorangehenden Anspruch, umfassend:
- für jeden Luftauslass (17a, 17b, 19) mindestens ein Organ (33, 35, 37) zur Verbindung mit einer Mischkammer (27, 29) und
- mindestens einen Aktuator (41, 43), der dazu ausgelegt ist, durch die Steuerschaltung (7) angesteuert zu werden, um die Positionierung des mindestens einen Verbindungsorgans (33, 35, 37) zu steuern.

9. Kraftfahrzeug, umfassend eine Anlage nach einem der Ansprüche 5 bis 8.

10. Verfahren zur Regelung der Temperatur in einem Fahrgastraum (H) eines Kraftfahrzeugs über eine Vorrichtung (1) nach einem der Ansprüche 1 bis 4 zur Steuerung einer Heizungs- und/oder Lüftungs- und/oder Klimatisierungsanlage nach einem der Ansprüche 5 bis 8, **dadurch gekennzeichnet, dass** das Verfahren die folgenden Schritte aufweist:
- über mindestens ein Steuerorgan (51, 53) Auswählen einer Temperatur eines Luftstroms (F1, F2), der über mindestens einen mit dem Steuerorgan (51, 53) verbundenen Luftauslass (17a, 17b, 19) abgegeben werden soll,
- Empfangen mindestens eines Eingangssignals vom Steuerorgan (51, 53) und
- Ausgeben eines Steuersignals zum Ansteuern mindestens eines Mischorgans (21, 23, 25), um die Temperatur des Luftstroms (F1, F2) zum mindestens einen verbundenen Luftauslass (17a, 17b, 19) einzustellen.

## Claims

1. Control device (1) for a heating and/or ventilation and/or air-conditioning installation of a motor vehicle comprising an interior (H), said installation comprising an air treatment housing (9) having:
- at least two air outlets (17a, 17b, 19) intended to open into a zone (ZG, ZD) of the vehicle interior (H), including at least a first defrosting and/or ventilation air outlet (17a, 17b) and at least one second air outlet (19) at foot level, and
- at least one first (21) and at least one second (23, 25) member for mixing the air flow in order to produce an air flow at an adjusted temperature bound for said first and/or second air outlet (17a, 17b, 19),
**characterized in that** said device (1) has:
- a user interface (5) configured to be arranged in the vehicle interior (H), comprising at least one first control member (51) for setting the temperature of a first air flow (F1) bound for said first air outlet (17a, 17b) and at least one second control member (53) for setting the temperature of a second air flow (F2) bound for said second air outlet (19), and
- a control circuit (7) configured to:
receive, from each control member (51, 53), an input signal with an individual temperature setpoint, and to
output separate control signals for controlling said first and second mixing members (21, 23, 25), so as to independently adjust the temperature of the first and second air flows (F1, F2) bound for said first air outlet (17a, 17b) and said second air outlet (19), respectively.

2. Device (1) according to the preceding claim, wherein the user interface (5) is configured to be arranged in a vehicle interior (H) having at least two zones (ZG, ZD), and comprises:
- at least two first control members (51) for setting the temperature of a first air flow (F1) bound for at least one first air outlet (17a, 17b) for each zone (ZG, ZD) of the vehicle interior (H), and
- at least two second control members (53) for setting the temperature of a second air flow (F2) bound for at least one second air outlet (19) for each zone (ZG, ZD) of the vehicle interior (H).

3. Device (1) according to either of the preceding claims, wherein the control circuit (7) is configured to output separate control signals for the independent control:
- of at least one first actuator (41) for said at least one first mixing member (21) in a first mixing chamber (27) of said housing (9), and
- of at least one second actuator (43) for said at least one second mixing member (23, 25) in a second mixing chamber (29) of said housing (9).

4. Device (1) according to any one of the preceding claims, wherein the control members (51, 53) are chosen from at least one setting knob, a touch screen, a touch pad.

5. Heating and/or ventilation and/or air-conditioning installation of a motor vehicle, having:
- an air treatment housing (9) having at least two air outlets (17a, 17b, 19) intended to open into a zone (ZG, ZD) of the vehicle interior (H), including at least a first defrosting and/or ventilation air outlet (17a, 17b) and at least one second air outlet (19) at foot level, and
- at least one first (21) and one second (23, 25) member for mixing the air flow that are arranged in said housing (9) in order to produce an air flow (F1, F2) at an adjusted temperature bound for said first (17a, 17b) and/or second (19) air outlet, **characterized in that** said installation has a control device (1) according to any one of the preceding claims for controlling said first (21) and second (23, 25) mixing members independently of one another, depending on an individual temperature setpoint, so as to deliver a first air flow (F1) at a first adjusted temperature bound for said first air outlet (17a, 17b) and/or a second air flow (F2) at a second adjusted temperature bound for said second air outlet (19).

6. Installation according to the preceding claim, having at least one separating wall (31) arranged in an air duct of said housing (9) so as to separate the air duct into a first part having said at least one first air outlet (17a, 17b) and a second part having said at least one second air outlet (19), and wherein said at least one first mixing member (21) is arranged in the first part of the air duct and said at least one second mixing member (23, 25) is arranged in the second part of the air duct.

7. Installation according to one of the preceding claims, having:
- at least one first (27) and at least one second (29) mixing chamber, each comprising at least one member (21, 23, 25) for mixing the air flow in order to produce an air flow at an adjusted temperature, and
- at least one first actuator (41) for said at least first mixing member (21) in a first mixing chamber (27) of said housing (9), and at least one second actuator (43) for said at least one second mixing member (23, 25) in the second mixing chamber (29), which are configured to be controlled independently of one another by the control circuit (7).

8. Installation according to the preceding claim, having:
- for each air outlet (17a, 17b, 19), at least one member (33, 35, 37) for placing it in communication with a mixing chamber (27, 29), and
- at least one actuator (41, 43) configured to be controlled by the control circuit (7) so as to control the position of said at least one member (33, 35, 37) for placing in communication.

9. Motor vehicle comprising an installation according to any one of Claims 5 to 8.

10. Method for managing the temperature in a motor vehicle interior (H) by way of a control device (1) according to any one of Claims 1 to 4 of a heating and/or ventilation and/or air-conditioning installation according to any one of Claims 5 to 8, **characterized in that** said method involves the following steps:
- selecting, by way of at least one control member (51, 53), a temperature of an air flow (F1, F2) to be delivered via at least one air outlet (17a, 17b, 19) associated with said control member (51, 53),
- receiving at least one input signal from said control member (51, 53), and
- outputting a control signal for controlling at least one mixing member (21, 23, 25) so as to adjust the temperature of the air flow (F1, F2) bound for said at least one associated air outlet (17a, 17b, 19) .
